Europäisches Patentamt

European Patent Office

Office européen des brevets

(11) Veröffentlichungsnummer : **0 049 846**
**B1**

(12) # EUROPÄISCHE PATENTSCHRIFT

(45) Veröffentlichungstag der Patentschrift :
26.06.85

(21) Anmeldenummer : 81107947.4

(22) Anmeldetag : 06.10.81

(51) Int. Cl.⁴ : **E 02 F 5/10, F 16 L 1/02**

(54) **Verfahren zur maschinellen Herstellung einer Rohrgrabensohle und zum Verlegen von Rohren auf dieser Sohle.**

(30) Priorität : 09.10.80 DE 3038116

(43) Veröffentlichungstag der Anmeldung :
21.04.82 Patentblatt 82/16

(45) Bekanntmachung des Hinweises auf die Patenterteilung : 26.06.85 Patentblatt 85/26

(84) Benannte Vertragsstaaten :
AT FR GB IT

(56) Entgegenhaltungen :
US-A- 3 638 438
US-A- 3 830 606
US-A- 3 994 139
US-A- 4 068 488
BOUW, Band 19, Nr. 7, 15. Februar 1964, Seite 226,
Rotterdam, NL., "Ongewapende betonnen buizen"

(73) Patentinhaber : Ed. Züblin Aktiengesellschaft
Jägerstrasse 22
D-7000 Stuttgart 1 (DE)

(72) Erfinder : Nussbaumer, Manfred, Dipl.-Ing.
Metzinger Weg 4
D-7250 Leonberg-Ezach (DE)
Erfinder : Woldt, Jürgen, Dr.-Ing.
Vogelherdweg 40
D-7022 Leinfelden (DE)
Erfinder : Hornung, Karl, Dipl.-Ing.
Dallenweg 27
D-7303 Neuhausen a.d.F (DE)
Erfinder : Gläser, Eberhard, Dipl.-Ing.
Lindenstrasse 46
D-7307 Aichwald (DE)

(74) Vertreter : Jackisch, Walter, Dipl.-Ing.
Menzelstrasse 40
D-7000 Stuttgart 1 (DE)

**Beschreibung**

Die Erfindung betrifft ein Verfahren zur maschinellen Herstellung einer Rohrgrabensohle und zum Verlegen von Rohren auf dieser Sohle entsprechend dem Oberbegriff des Anspruches 1.

Beim Verlegen von Rohren ist es bekannt, auf der Grabensohle ein Rohrbett aus künstlich eingebrachtem und verdichtetem Bodenmaterial herzustellen, das als Rohrauflagerung alle Lasten des Rohres in den Untergrund überträgt. Der Einbau des Rohrbettes erfolgt in zwei Phasen : zunächst der Teil unterhalb des Rohres vor dessen Einbau ; dann nach dem Rohreinbau die Bereiche der Rohrzwickel. Das Rohrbett kann — unabhängig vom Rohrdurchmesser — eine Dicke von 50 cm haben. Sein Einbau ist äußerst material- und zeitaufwendig. Das Einbringen und Verdichten der Zwickelbereiche ist dabei besonders schwierig. Es muß jedoch gerade hier mit äußerster Sorgfalt erfolgen, da ein statisch gut gelagertes Rohr vor allem hier seine Last abträgt.

Ein Verfahren entsprechend dem Oberbegriff des Anspruches 1 ist aus der US-A-4 068 488 bekannt. Auch bei diesem Verfahren wird für das Rohrbett sehr viel Füllmaterial benötigt.

Die Aufgabe der Erfindung besteht nun darin, ein Verfahren der eingangs beschriebenen Art so zu verbessern, daß ein schmales Rohrbett von statisch besonders günstiger, gleichmäßiger Dicke bei gleichzeitiger wesentlicher Verringerung des Material- und Verdichtungsaufwandes für das Rohrbett entsteht und die Verfüllung in einem nur schmalen Raum zwischen Rohraußenfläche und dazu parallel laufender Rohrgrabensohle erforderlich wird, wobei das Verfüllmaterial beim Einbringen unmittelbar verdichtet wird.

Diese Aufgabe wird erfindungsgemäß durch die kennzeichnenden Merkmale des Anspruches 1 gelöst.

Bevorzugte Ausgestaltungen und Weiterbildungen der Erfindung sind durch die Merkmale der Unteransprüche gekennzeichnet.

Mit der Erfindung wird der Vorteil erreicht, daß das Füllmaterial beim Einblasen durch den Preßluftstrom gleich ausreichend verdichtet wird. Dies ist in allen Schlitzraumbereichen der Fall, wobei die Verdichtung im Sohlbereich dadurch erreicht wird, daß Materialzuführschläuche an jeder Stelle von beiden Seiten des Rohres gleichzeitig eingesetzt werden können.

Vorteilhaft ist weiterhin, daß Toleranzen der Grabensohle durch die Schlitzraumfüllung mühelos ausgeglichen werden und eine satte Auflagerung des Rohres erreicht wird. Die Breite des Schlitzraumes wird hauptsächlich dadurch bestimmt, daß die Einführung des Füllmaterialschlauches gewährleistet ist.

Ein weiterer großer Vorteil des erfindungsgemäßen Verfahrens besteht darin, daß das Rohr unmittelbar nach dem Einblasen des Füllmaterials endgültig abgelegt werden kann. Durch die überraschend erzielbare Gleichmäßigkeit des Rohrbettes in Dicke und Dichte kann das Rohrbett seine Lastübertragungsfunktion zwischen Rohr und Grabensohle optimal erfüllen, wobei nicht — wie bei den bekannten Rohrlegeverfahren — die Gefahr besteht, daß sich die Auflagerkräfte im Sohlbereich konzentrieren.

Weitere Vorteile und Einzelheiten der Erfindung sind der nachfolgenden Beschreibung und der Zeichnung zu entnehmen, die in schematischer Darstellung bevorzugte Ausführungsformen als Beispiel zeigt. Es stellen dar :

Figur 1 eine Schnittansicht durch einen Erdbodenteil bei der Herstellung eines Rohrgrabens mit einem Bagger,

Figur 2 eine Seitenansicht der in Fig. 1 dargestellten Rohrgrabenherstellung,

Figur 3 eine Schnittansicht eines Rohrgrabens mit einem eingehängten Rohr,

Figur 4 eine geschnittene Teilseitenansicht der Darstellung gemäß Fig. 3,

Figur 5 eine vergrößerte Teilschnittansicht des Sohlbereiches gemäß Fig. 3.

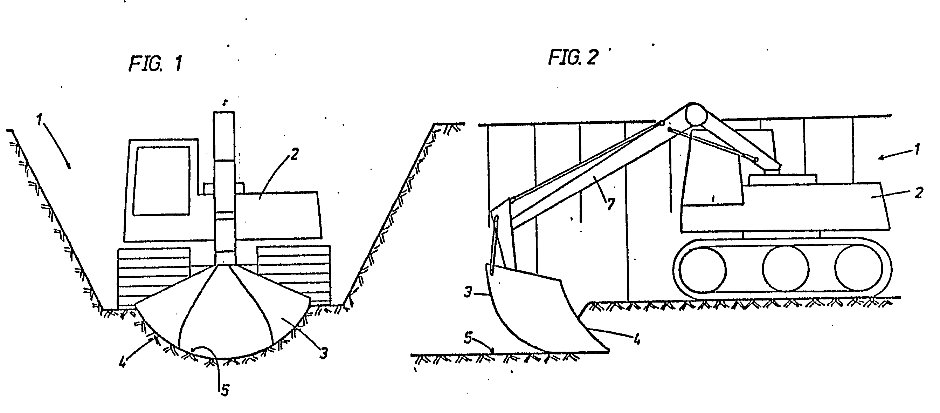

Den Fig. 1 und 2 ist zu entnehmen, daß die Herstellung des Rohrgrabens 1 mit einem Bagger 2 erfolgt, der einen Löffel 3 besitzt, der eine Schneide 4 aufweist.

Die Schneide 4 ist so bemessen, daß die damit erzeugte Sohlenkontur 5 der endgültigen Rohrgrabensohle 6 entspricht. Das heißt, daß mit der Löffelstellung die Rohrgrabensohle 6 hergestellt werden kann. Selbstverständlich ist es auch möglich, zur Erzielung eines größeren Rohrgrabenquerschnittes den Löffel 3 in verschiedene Stellungen zu verschwenken. Beim Ausheben des Erdbodens wird der Löffel 3 mit Hilfe des Baggers 2 parallel zur auszuhebenden Rohrgrabensohle 6 geführt. Die Länge des Auslegers 7 und die Festigkeit des Bodens bestimmen, wie lang das in einer Baggerstellung gefertigte Grabensohlenstück ist und mit wieviel Löffelschnitten die endgültige Sohle erreicht wird. Hierzu ist es besonders günstig, einen Bagger 2 einzusetzen, der mit konstant einstellbarem Anstellwinkel des Löffels 3 schneiden kann.

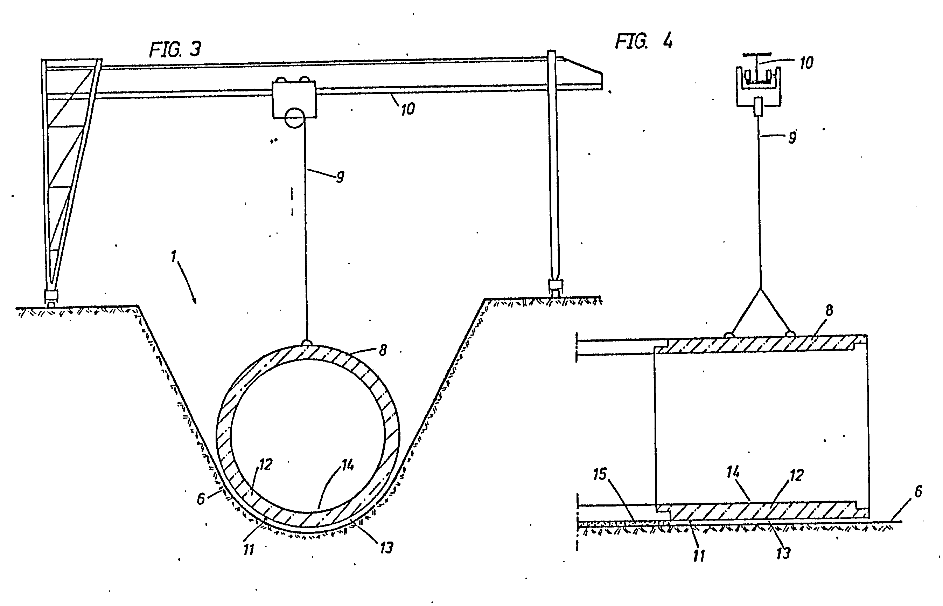

Den Fig. 3 und 4 ist zu entnehmen, daß in den fertiggestellten Rohrgraben 1 das zu verlegende Rohr 8 eingehängt ist, das an einem Hebezeug 9 einer verfahrbaren Kranbahn 10 befestigt ist. Der Umfangswinkel des Kreisbogenteils der Rohrgrabensohle 6 beträgt beim vorliegenden Ausführungsbeispiel etwa 120°, kann aber auch je nach den Anforderungen und baulichen Gegebenheiten etwas kleiner oder auch bis zu 180° ausgeführt werden.

Die Rohrgrabensohle 6 ist so ausgebildet und das Rohr 8 ist im Rohrgraben 1 in einem solchen Abstand über der Rohrgrabensohle 6 unterstützungsfrei hängend gehalten, daß zwischen der Außenfläche 11 der Rohrsohle 12 und der Rohrgrabensohle 6 ein nur schmaler, gekrümmter Schlitzraum 13 gebildet ist. Der Schlitzraum 13 ist so bemessen, daß gewisse Toleranzen von Rohraußenfläche 11 und Rohrgrabensohle 6 ausgeglichen werden und der Zuleitungsschlauch für das Füllmaterial hineinpaßt.

In den Schlitzraum 13 wird ein Füllmaterial 15 eingeblasen. Dieses Füllmaterial 15 wird durch den Preßluftstrom ohne irgendwelche zusätzlichen Mittel oder Arbeitsgänge unmittelbar im Schlitzraum 13 verdichtet, so daß in schnellem Arbeitsfortgang ein Auflager für das Rohr 8 mit umgehender Tragfähigkeitsaufnahme und gleichbleibend konstanter Auflagefestigkeit gegeben ist.

Das Füllmaterial 15 kann ein körniges Material wie Sand, Kies oder dergleichen sein. Nach einem weiteren Vorschlag der Erfindung kann dem Füllmaterial 15 jedoch auch ein Bindemittel zugesetzt werden.

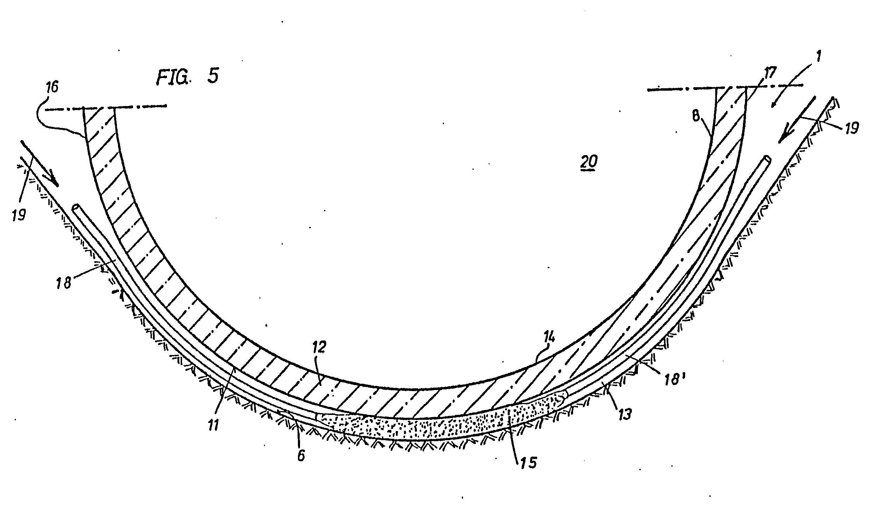

Nach einer bevorzugten Ausführung gemäß Fig. 5 erfolgt das Einblasen des Füllmaterials 15 in den Schlitzraum 13 an jeder Stelle des Rohres 8 von beiden Rohrseiten 16, 17 gleichzeitig. Dadurch erreicht das Füllmaterial 15 auch im Sohlbereich des Schlitzraumes 13 eine ausreichende Dichte. Während des einblasens des Füllmaterials 15 werden die Materialzuführschläuche 18, 18', durch die das Füllmaterial 15 mittels eines Preßluftstromes 19 gefördert wird, im Schlitzraum 13 in Längsrichtung des Rohres 8 kontinuierlich weiter verschoben, wodurch eine gleichmäßig fortschreitende Auflagerbildung erreicht wird. Es liegt auch im Rahmen der Erfindung, die Materialzuführschläuche 18, 18' im wesentlichen parallel zur Längsrichtung des Rohres 8 zu legen und ausgehend von dessen Stirnseite kontinuierlich in Längsrichtung des Rohrgrabens 1 im Schlitzraum 13 weiter zu ziehen.

**Patentansprüche**

1. Verfahren zur maschinellen Herstellung einer Rohrgrabensohle und zum Verlegen von Rohren auf dieser Sohle, wobei die Rohrgrabensohle (6) ausgehoben wird und der Raum zwischen der Rohrgrabensohle und dem in Position gehaltenen Rohr (8) durch Füllmaterial (15) gefüllt wird, das mittels eines Preßluftstromes (19) eingeblasen und dabei unmittelbar verdichtet wird, dadurch gekennzeichnet, daß die Rohrgrabensohle (6) in geometrisch gleicher Form wie die Außenfläche (11) des Rohres (8) im Auflagerbereich, aber um einige Zentimeter größer als dieser ausgehoben wird, um einen mit Füllmaterial zu füllenden Schlitzraum (13) zwischen der Rohrgrabensohle (6) und dem in Position gehaltenen Rohr (8) zu bilden.

2. Verfahren nach Anspruch 1, dadurch gekennzeichnet, daß als Füllmaterial (15) körniges Material wie Sand, Kies oder dergleichen verwendet wird.

3. Verfahren nach Anspruch 1 oder 2, dadurch gekennzeichnet, daß dem Füllmaterial (15) ein Bindemittel zugesetzt wird.

4. Verfahren nach einem der Ansprüche 1 bis 3, dadurch gekennzeichnet, daß das Einblasen des Füllmaterials (15) in den Schlitzraum (13) an jeder Stelle des Rohres (8) gleichzeitig von beiden Rohrseiten (16, 17) erfolgt.

5. Verfahren nach einem der Ansprüche 1 bis 4, dadurch gekennzeichnet, daß beim Einblasen des Füllmaterials (15) Zuführschläuche (18, 18') in Längsrichtung des Rohres (8) in den Schlitzraum (13) eingeführt werden.

6. Verfahren nach einem der Ansprüche 1 bis 5, dadurch gekennzeichnet, daß das Rohr (8) beim Einbringen des Füllmaterials (15) unterstützungsfrei über der Rohrgrabensohle (6) gehalten wird.

7. Verfahren nach einem der Ansprüche 1 bis 6, dadurch gekennzeichnet, daß das Rohr (8) beim Einbringen des Füllmaterials (15) in einem solchen Abstand über der Rohrgrabensohle (6) gehalten wird, daß der Schlitzraum (13) so schmal ist, daß Toleranzen des Rohrgrabensohle (6) auszugleichen sind und die Einführung des Zuleitungsschlauches (18, 18') gewährleistet ist.

**Claims**

1. Process for the mechanical production of a pipe trench bottom and for the laying of pipes on said bottom whereby the pipe trench bottom (6) is excavated and the space between the pipe trench bottom and the positioned pipe (8) is filled by fill material (15), said fill material being blown in by means of a compressed-air stream (19) and thereby being compacted directly, characterized in that the pipe trench bottom (6) is excavated in geometrically the same shape as the outer surface (11) of the pipe (8) in the support area, but a few centimetres larger than the latter in order to form a channel space (13) between the pipe trench bottom (6) an the positioned pipe (8), said channel space is to be filled with fill material.

2. Process according to claim 1, characterized in that granular material such as sand, gravel or similar material is used as fill material (15).

3. Process according to claim 1 or 2, characterized in that a binding agent is added to the fill material (15).

4. Process according to any one of claims 1 to 3, characterized in that the fill material (15) is blown into the channel space (13) simultaneously from the both pipe sides (16, 17) at each point of the pipe (8).

5. Process according to any one of claims 1 to 4, characterized in that for blowing in the fill material (15) feed tubes (18, 18') are introduced into the channel space (13) in the longitudinal direction of the pipe (8).

6. Process according to any one of claims 1 to 5, characterized in that for placing the fill material (15) the pipe (8) is held support-free above the pipe trench bottom (6).

7. Process according to any one of claims 1 to 6, characterized in that for placing the fill material (15) the pipe (8) is held at such a distance above the pipe trench bottom (6) that a channel space (13) is so narrow that tolerances of the pipe trench bottom (6) can be compensated and the introduction of the feed tube (18, 18') is guaranteed.

## Revendications

1. Procédé pour réaliser mécaniquement un fond de tranchée pour canalisation et pour poser des canalisations sur ce fond, dans lequel on creuse le fond de tranchée (6) et on remplit le volume entre le fond de tranchée et la canalisation (8) tenue en position, avec un matériau de remblai (15) qui est insufflé au moyen d'un courant d'air comprimé (19) et en même temps immédiatement compacté, caractérisé en ce que le fond de la tranchée pour canalisation (6) est creusé dans la même forme géométrique que la surface extérieure (11) de la canalisation (8) dans la zone d'appui, mais avec quelques centimètres de plus que celle-ci afin de former une fente (13) entre le fond de tranchée (6) et la canalisation (8) tenue en position, qui sera remplie de matériau de remblai.

2. Procédé selon la revendication 1, caractérisé en ce qu'on utilise comme matériau de remblai (15) un matériau granulaire comme le sable, le gravier ou l'analogue.

3. Procédé selon la revendication 1 ou 2, caractérisé en ce qu'on ajoute un liant au matériau de remblai (15).

4. Procédé selon l'une des revendications 1 à 3, caractérisé en ce que l'insufflation du matériau de remblai (15) dans la fente (13) a lieu à chaque endroit de la canalisation (8) simultanément des deux côtés (16, 17) de la canalisation.

5. Procédé selon l'une des revendications 1 à 4, caractérisé en ce que, pour l'insufflation du matériau de remblai (15), on introduit dans la fente (13), dans le sens longitudinal de la canalisation (8), des tuyaux souples d'alimentation (18, 18').

6. Procédé selon l'une des revendications 1 à 5, caractérisé en ce que, lors de l'introduction du matériau de remblai (15), la canalisation (8) est tenue sans support au-dessus du fond de la tranchée (6).

7. Procédé selon l'une des revendications 1 à 6, caractérisé en ce que, lors de l'introduction du matériau de remblai (15), la canalisation (8) est maintenue au-dessus du fond de tranchée (6) à une distance telle que la fente (13) est suffisamment étroite pour compenser des tolérances du fond de la tranchée (6) et assurer l'introduction des tuyaux souples d'alimentation (18, 18').

FIG. 1

FIG. 2

0 049 846

FIG. 3

FIG. 4

FIG. 5

0 049 846